# EUROPÄISCHE PATENTSCHRIFT

(11) **EP 2 031 625 B1**
(45) Veröffentlichungstag und Bekanntmachung des Hinweises auf die Patenterteilung: **06.07.2011**
(21) Anmeldenummer: 07017245.7
(22) Anmeldetag: 03.09.2007
(51) Int. Cl.: H01H 71/02, H02B 1/04

(54) **Verfahren zum Erkennen von Komponenten in einer elektrischen Niederspannungs-Schaltanlage**
Method for identifying components in an electrical low-voltage switching station
Procédé de reconnaissance de composants dans une installation de commutation à basse tension électrique

(43) Veröffentlichungstag der Anmeldung: 04.03.2009
(73) Patentinhaber: SIEMENS AKTIENGESELLSCHAFT, 80333 München (DE)
(72) Erfinder: Fröhlich, Paul, 92237 Sulzbach-Rosenberg (DE); Thamm, Peter, Dr., 69469 Weinheim (DE)

(56) Entgegenhaltungen:
- EP-A- 1 744 487
- DE-A1- 10 315 646
- DE-U1-202006 000 702
- DE-U1-202007 006 824

## Beschreibung

Die Erfindung betrifft ein Verfahren zum Erkennen von Komponenten in einer elektrischen Niederspannungs-Schaltanlage. Darüber hinaus betrifft die Erfindung eine elektrische Niederspannungs-Schaltanlage.

Aus der DE 20 2007 006 824 U1 ist ein Schaltschrank zur Installation elektrischer Geräte wie Steuereinrichtungen, Schalteinrichtungen oder Reihenklemmen bekannt. In einem vorzugsweise abschließbaren Schaltschrankkorpus des Schaltschranks ist wenigstens ein Montageboden angeordnet, welcher mit Schienen zum Aufsetzen der elektrischen Geräte versehen ist, wobei die Schienen mit Leitern versehen sind, die die elektrischen Geräte beim Aufsetzen auf die Schienen kontaktieren. Die elektrischen Geräte können mit RFID-Tags versehen sein, um den Gerätetyp durch einen Empfänger und eine daran angeschlossene Steuereinrichtung am Schaltschrank automatisch zu erkennen.

Aus dem Bereich der Energieverteilung und in Motorschaltschränken, also Niederspannungs-Schaltanlagen für Motorabzweige, deren Hauptaufgabe es ist, Motoren in industriellen Prozesse zu steuern und zu schützen, ist der Einsatz der sogenannten Einschub-Technik bekannt. Dabei wird jeder Motorabzweig in einem eigenen Einschubmodul eingebaut. Diese Einschubmodule lassen sich dann nach Art von Schubkästen in entsprechend vorgesehene Einschubschächte positionieren. Solche Motorschaltschränke werden auch als bei Motor Control Center (MCC) bezeichnet.

Motorabzweige können anwendungsspezifisch unterschiedlich ausgeführt sein. Von der Hauptstromseite aus gesehen kann ein Direktstarter, ein Wendestarter, ein Stern-Dreieck-Starter usw. vorgesehen sein. Von der Steuerstromseite aus gesehen können sich die Anbindungen an die Vor-Ort-Steuerstelle, die Anzeigen, die Verzögerungen, die Verriegelungen usw. unterscheiden. Trotz dieser unterschiedlichen Funktionalitäten unterscheiden sich die Einschubmodule äußerlich konstruktiv nicht voneinander. Sowohl die äußeren Abmessungen, als auch die elektrischen Schnittstellen der Einschubmodule sind von den Eigenheiten des Motorabzweigs im Inneren des Einschubmoduls unabhängig. Dies kann sehr leicht zu einer Fehlmontage führen, beispielsweise dann, wenn ein Motorabzweig beispielsweise wegen eines Kurzschlusses oder des Lebensdauerendes der Schütze oder des Leistungsschalters ausgetauscht werden muss. Betriebsstörungen oder eine Beschädigungen der Gesamtanlage können bei falsch eingewechselten Einschubmodulen die Folge sein. Besonders bei sicherheitsrelevanten Motorabzweigen ist es daher unbedingt erforderlich, Verwechslungen sicher auszuschließen.

Um Verwechslungen zu vermeiden, ist es aus dem Stand der Technik bekannt, eine mechanische Kodierung der Einschubmodule durchzuführen. Hierbei kommen an beiden Komponenten mechanische Kodierstecker oder Kodiereinrichtungen zum Einsatz, die eine fehlerhafte Kombination von Einschubmodul und Einschubschacht verhindern sollen. Nachteilig bei der Verwendung dieser Kodierstecker ist es jedoch, dass sich damit nur eine vergleichsweise geringe Anzahl von Kodiermöglichkeiten verwirklichen lässt. Bei Schaltanlagen mit einer großen Anzahl von Einschüben kann daher das Risiko einer Fehlmontage nicht vollständig ausgeschlossen werden. Darüber hinaus ist neben dem Kennzeichnungsaufwand bei der Herstellung der Einschubmodule auch der Logistikaufwand sowie der Prüf- und Testaufwand bei der Inbetriebnahme erheblich, wodurch hohe Bereitstellungs- und Wartungskosten entstehen.

Eine Aufgabe der vorliegenden Erfindung ist es, eine besonders einfache und sichere Alternative zu den zuvor beschriebenen Kodiersteckern bereitzustellen.

Diese Aufgabe wird durch ein Verfahren nach Anspruch 1 bzw. eine elektrische Schaltanlage nach Anspruch 8 gelöst.

Erfindungsgemäß ist ein Verfahren zum Erkennen von Komponenten in einer elektrischen Niederspannungs-Schaltanlage mit wenigstens einem in einem Einschubschacht positionierbaren, zur drahtlosen Übertragung erkennungsrelevanter Daten ausgebildeten Einschubmodul vorgesehen, welches dadurch gekennzeichnet ist, dass Daten, die für die Erkennung des Einschubschachtes und des Einschubmoduls relevant sind, von Kommunikationseinrichtungen, die dem Einschubmodul und dem Einschubschacht zugeordnet sind, drahtlos gesendet und drahtlos empfangen werden, und dass eine automatische Erkennung des Einschubschachtes und des Einschubmoduls erfolgt, die eine automatische Zuordnung dieser Komponenten zueinander ermöglicht.

Die zur Ausführung dieses Verfahrens ausgebildete elektrische Niederspannungs-Schaltanlage weist wenigstens ein in einem Einschubschacht positionierbares, zur drahtlosen Übertragung erkennungsrelevanter Daten ausgebildetes Einschubmodul auf und ist dadurch gekennzeichnet, dass sowohl dem Einschubschacht als auch dem Einschubmodul Einrichtungen zur drahtlosen Kommunikation zugeordnet sind, wobei die Kommunikationseinrichtungen zum Senden und Empfangen von Daten ausgebildet sind, die für eine automatische Erkennung des Einschubschachtes und des Einschubmoduls relevant sind und eine automatische Zuordnung dieser Komponenten zueinander ermöglichen.

Die im Zusammenhang mit der Schaltanlage erläuterte Vorteile und Ausgestaltungen gelten sinngemäß auch für das Verfahren und umgekehrt.

Eine Kernidee der Erfindung ist es, erkennungsrelevante Daten drahtlos zu übertragen, um damit eine exakte Zuordnung des Einschubmoduls (und damit des darin angeordneten Motorabzweiges oder dergleichen) zu einem bestimmten Einschubschacht, also einem bestimmten Einbauort der Schaltanlage, zu ermöglichen. Der Einsatz einer mechanischen Kodiervorrichtung, wie beispielsweise eines Kodiersteckers, ist damit überflüssig. Als kodierte "Kupplungsteile" dienen die Kommunikationseinrichtungen von Einschubmodul und/oder Einschubschacht.

Von Vorteil ist, dass die Anzahl der "Kodierungen" praktisch nicht begrenzt ist. Durch die Verwendung von erkennungsrelevanten Daten, deren Vielfalt und Auswahl nicht beschränkt ist, können Erkennungs- und damit Zuordnungsvorgänge für beliebig viele Komponenten (Einschubmodule, Einschubschächte) erfolgen. Unzulänglichkeiten mechanischer Kodierstecker, beispielsweise aufgrund von mechanischen Defekten oder Verschmutzung, gehören der Vergangenheit an. Insgesamt wird mit der Erfindung eine besonders einfache und zudem auch sichere Alternative zu den aus dem Stand der Technik bekannten Kodiersteckern bereitgestellt. Besonders vorteilhaft ist die Anwendung der Erfindung in Motorschaltschränken, da hier eine hohe Varianz gegeben ist und zugleich ein schneller und sicherer Wechsel der Einschübe besonders notwendig und gewünscht ist.

Anstelle einer mechanischen Kodierung wird also bei der vorliegenden Erfindung eine elektrische, drahtlose Kodierung eingesetzt, um eine Zuordnung von Einschubmodulen zu Einschubschächten zu ermöglichen. Vorteilhaft ist es dabei, dass intelligente Einschubmodule eingesetzt werden, beispielsweise in Form von Motorsteuerungs- oder Motormanagementsystemen.

Unter dem Begriff "Niederspannungs-Schaltanlage" werden dabei Schaltanlagen verstanden, die für einen Betrieb mit Niederspannung, also einen Spannungsbereich bis 1000 Volt ausgelegt sind.

Unter dem Begriff "erkennungsrelevante Daten" werden dabei alle Daten verstanden, die einer Identifikation einer Komponente dienen können bzw. sicherstellen, dass das Zusammenwirken mehrerer Komponenten bestimmungsgemäß erfolgt. Insbesondere handelt es sich dabei um Angaben zur Art der verwendeten Steuerfunktionen (Direktstarter, Wendestarter, usw.), herstellerspezifische Ausprägungen (Verriegelungen), abzweigspezifische Daten (z.B. Motorstrom), Zeitabläufe, die Historie des Einschubmoduls usw.

Die erkennungsrelevanten Daten sind dabei entweder bereits in den Komponenten hinterlegt oder werden bei Bedarf oder regelmäßig von einer externen Datenquelle an die Komponenten übertragen.

Unter dem Begriff "Einschubschacht" wird allgemein und unabhängig von dessen konkreter konstruktiver Ausgestaltung der Aufnahme- bzw. Montageort des Einschubmoduls in der Schaltanlage verstanden. Der Einschubschacht kann also auch ein Halterahmen oder dergleichen sein.

Die drahtlose Übertragung kann dabei mit Hilfe verschiedenster Technologien verwirklicht werden. Als besonders vorteilhaft haben sich Funkübertragungssysteme, beispielsweise auf RFID- oder WLAN-Basis, und optische Übertragungssysteme, beispielsweise auf Infrarotbasis, herausgestellt. Aber auch herkömmliche berührungslose Übertragungssysteme auf der Basis von Magnetfeldern oder dergleichen können verwendet werden.

Vorteilhafte Ausgestaltungen der Erfindung sind in den Unteransprüchen angegeben.

Besonders vorteilhaft ist es, wenn das Senden und/oder Empfangen der erkennungsrelevanten Daten während der oder unmittelbar im Anschluss an die Montage des Einschubmoduls in den Einschubschacht sowie vorzugsweise automatisch erfolgt. Anders ausgedrückt erfolgt das Senden und/oder Empfangen dieser Daten vorzugsweise in einem direkten zeitlichen Zusammenhang mit der Montage eines Einschubmoduls in einen Einschubschacht. Damit wird sichergestellt, daß das Erkennen und die Freigabe bzw. Nichtfreigabe des Betriebs eines bestimmten Einschubmoduls zeitnah erfolgt.

Während es im Sinne der Erfindung grundsätzlich offen ist, zwischen welchen Objekten die Kommunikation in Bezug auf erkennungsrelevante Daten stattfindet - so kann beispielsweise vorgesehen sein, daß das Einschubmodul direkt mit einem entfernt angeordneten Empfänger kommuniziert, beispielsweise einem an anderer Stelle der Schaltanlage angeordneten Steuerzentrale - so ist es nach einer besonders vorteilhaften Ausführungsform der Erfindung vorgesehen, dass die dem Einschubschacht zugeordnete Kommunikationseinrichtung und/oder die dem Einschubmodul zugeordnete Kommunikationseinrichtung erkennungsrelevante Daten von derjenigen Kommunikationseinrichtung erhält, die der jeweils korrespondierenden Komponente zugeordnet ist. Die korrespondierende Komponente ist dabei diejenige, mit welcher gerade ein Zusammenführen im Sinne einer Montage erfolgt. Es ist dabei sowohl möglich, dass die dem Einschubschacht zugeordnete Kommunikationseinrichtung erkennungsrelevante Daten von der dem Einschubmodul zugeordneten Kommunikationseinrichtung erhält, als auch, dass die dem Einschubmodul zugeordnete Kommunikationseinrichtung erkennungsrelevante Daten von der dem Einschubschacht zugeordneten Kommunikationseinrichtung erhält. Auch eine Datenübertragung in beide Richtungen ist möglich und - je nach Anwendungsfall - auch erwünscht.

Erfindungsgemäß kann somit unter anderem eine "passive", wie auch eine "aktive Kodierung" erfolgen. Dabei wird unter einer "passiven Kodierung" eine Konfiguration verstanden, bei der die dem üblicherweise ortsfesten Einschubschacht zugeordnete Kommunikationseinrichtung lediglich als "passive" Komponente vorliegt, welche von einer "aktiven" Komponente, hier der dem beweglichen Einschubmodul zugeordneten Kommunikationseinrichtung, angesprochen; gegebenenfalls mit Energie versorgt und "ausgelesen" wird. Ein Beispiel für eine derartige "passive Kodierung" ist der Einsatz der an sich bekannten Radio Frequency Identification (RFID)-Technologie. Diese ist besonders für sicherheitsrelevante Anwendungen geeignet, da das Risiko einer Beeinflussung von außen, beispielsweise durch Magnetfelder, gering ist. Andere Beispiele für eine "passive Kodierung" sind die Verwendung eines Schwingkreises oder eines Magnetschalters, deren Aufbau und Funktion dem Fachmann ebenfalls geläufig sind.

Unter einer "aktiven Kodierung" wird eine Konfiguration verstanden, bei der sowohl die dem Einschubschacht zugeordnete Kommunikationseinrichtung, als auch die dem Einschubmodul zugeordnete Kommunikationseinrichtung unabhängig voneinander funktionstüchtig, insbesondere selbst mit Energie versorgt sind. Ein Beispiel für eine derartige "aktive Kodierung" ist der Einsatz einer an sich bekannten Funk- oder Infrarotübertragungstechnologie oder dergleichen mit zwei autonomen Sende- und/oder Empfangseinheiten.

Gemäß einer weiteren Ausführung der Erfindung überträgt die dem Einschubschacht zugeordnete Kommunikationseinrichtung und/oder die dem Einschubmodul zugeordnete Kommunikationseinrichtung die erkennungsrelevanten Daten an eine dem Einschubschacht und/oder dem Einschubmodul zugeordnete lokale Freigabeeinheit und/oder an eine dem Einschubschacht und/oder dem Einschubmodul zugeordnete entfernte Freigabeeinheit. Mit anderen Worten ist es sowohl möglich, dass die dem Einschubmodul zugeordnete Kommunikationseinrichtung die erkennungsrelevanten Daten an eine dem Einschubmodul zugeordnete lokale und/oder eine entfernte Freigabeeinheit überträgt, als auch, dass die dem Einschubschacht zugeordnete Kommunikationseinrichtung die erkennungsrelevanten Daten an eine dem Einschubschacht zugeordnete lokale und/oder eine entfernte Freigabeeinheit überträgt.

Bei der Freigabeeinheit, also dem Mittel zum automatischen Erkennen von Einschubschacht bzw. Einschubmodul, handelt es sich vorzugsweise um eine Datenverarbeitungsvorrichtung, die zur Ausführung eines Computerprogramms zur Erkennung und Freigabe von Komponenten ausgebildet ist. Hierzu ist die Datenverarbeitungsvorrichtung mit wenigstens einem Mikroprozessor, einem Datenspeicher, einer Dateneingangsvorrichtung, einer Datenausgangsvorrichtung und entsprechenden Datenübertragungsvorrichtungen zwischen diesen Bestandteilen versehen.

Vorzugsweise wird das Einschubmodul und/oder der Einschubschacht zum Betrieb mit der korrespondierenden Komponente dann freigegeben, wenn eine Überprüfung der erkennungsrelevante Daten erfolgreich abgeschlossen ist, anderenfalls das Einschubmodul und/oder der Einschubschacht für einen solchen Betrieb gesperrt bleibt oder gesperrt wird. Die Entscheidung über die Freigabe erfolgt dabei unter Einbeziehung erkennungsrelevanter Daten in der Freigabeeinheit.

Besonders vorteilhaft ist es, wenn das Einschubmodul und/oder der Einschubschacht vor der Freigabe an einen Betrieb mit der korrespondierenden Komponente angepaßt wird. Mit anderen Worten kann unmittelbar nach der Erkennung der Komponenten und vor deren Freigabe eine Modifizierung des Einschubschachtes und/oder der Einschubkomponente erfolgen. Dies ist insbesondere dann von Vorteil, wenn die entsprechende Komponente ohne eine solche Modifizierung nicht für einen ordnungsgemäßen Betrieb befähigt wäre und erst die Modifizierung einen solchen Betrieb ermöglicht. Die Erkennung der Komponenten dient in diesem Fall in erster Linie dazu, zu ermitteln, in welchem Umfang einer Modifizierung vorgenommen werden muß. Die Modifizierung selbst, die vorzugsweise automatisch vonstatten geht, muß keine bauteilseitigen Änderungen umfassen. Oftmals ist es ausreichend, einzelne Komponenten von Einschubmodul und/oder Einschubschacht an die Anforderungen des konkreten Einzelfalls anzupassen, z. B. auf Seiten des Einschubschachtes eine Anpassung des Kommunikationsprotokolls durchzuführen.

So liegt es im Rahmen der Erfindung, in diesem Zusammenhang eine in dem Einschubmodul angeordnete Komponente, beispielsweise einen Motorabzweig, in Abhängigkeit von dem Ort des Einbaus, d.h. in Abhängigkeit von dem verwendeten Einschubschacht, mit geeigneten Betriebsparametern oder anderen Daten zu versorgen. Auch ist es möglich, in einer Grundkonstellation sämtliche zur Verfügung stehenden Einschubschächte "neutral" zu gestalten und erst im Anschluß an die Montage eines konkreten Einschubmoduls an die im Zusammenhang mit einem Betrieb dieses Einschubmoduls stehenden Erfordernisse anzupassen. Beispielsweise kann eine Anpassung des Motorstromes an die Schutzeinrichtung oder eine Anpassung an die Teilnehmeradresse des Einschubmoduls erfolgen.

Die zuletzt genannten Ausführungsformen der Erfindung sind sowohl bei dem Einsatz von RFID, als auch bei der "aktiven Kodierung" besonders einfach und vorteilhaft realisierbar.

Nachdem eine Freigabe erfolgt ist, wird dann das Einschubmodul und/oder der Einschubschacht vorzugsweise mit solchen Daten versorgt, die an einen Betrieb mit der korrespondierenden Komponente angepaßt sind. Darüber hinaus kann die gesamte Art und Weise des Betriebs der Komponenten an die Eigenschaften der verwendeten Komponenten angepaßt werden.

Insgesamt ergibt sich eine sehr flexible, den Bedürfnissen der jeweiligen Anwendung einfach anpaßbare Lösung, die mit geringem technischen Aufwand realisiert werden kann. Zusätzliche Vorteile ergeben sich durch die hohe Informationsdichte des Kodiermaterials, z.B. bei Verwendung der RFID-Technologie und der "aktiven Kodierung". So können beispielsweise Gruppenkodierungen definiert und/oder Parameter mit übertragen werden, so beispielsweise die Adresse der entsprechenden Komponente bei kommunikationsfähigen Systemen, also Systemen bei denen die Kommunikation zwischen Einschubmodulen und Einschubschächten einerseits und einer Steuerungszentrale oder dergleichen andererseits über ein Bussystem, insbesondere ein Feldbussystem, erfolgt, beispielsweise PROFIBUS oder PROFINET.

Die Erfindung wird nachfolgend anhand eines Ausführungsbeispiels beschrieben, das mit Hilfe von Zeichnungen näher erläutert wird. Hierbei zeigen in vereinfachten, z. T. schematischen Darstellungen:
- FIG 1: eine Schaltanlage nach dem Stand der Technik und
- FIG 2: eine erfindungsgemäße Schaltanlage.

Gleiche Bezugszeichen in den nachfolgend beschriebenen Figuren entsprechen Elementen gleicher oder vergleichbarer Funktion.

Aus dem Stand der Technik sind Motorschaltschränke 1 in Einschub-Technik bekannt. Dabei sind eine Anzahl Einschubmodule 2 vorgesehen, die in Einschubschächten 3 positionierbar sind. Jedes Einschubmodul 2 enthält dabei beispielsweise einen Motorabzweig. Zur Realisierung des Hauptstromkreises und des Steuerstromkreises sind sowohl an den Rückseiten 4 der Einschubmodule 2, als auch an den Rückseiten 5 der Einschubschächte 3, die durch die Rückwand des Motorschaltschrankes 1 gebildet wird, Steckschienen bzw. Steckverbinder 6, 7 oder geeignete Verbindungselemente anderer Art vorgesehen, die im montierten Zustand zusammenwirken. Diese Steckverbinder 6, 7 dienen im wesentlichen zur Übertragung von Hauptstrom (z. B. 400 V), zur Übertragung von Hilfsenergie (Steuerenergie) zur Versorgung der in dem Einschubmodul enthaltenen Geräte und Vorrichtungen und zum Zweck der Kommunikation zwischen dem Einschubmodul 2 einerseits und dem Einschubschacht 3 und damit der Schaltanlage andererseits, insbesondere zur Übertragung von Ansteuersignalen, Rückmeldungen, Fehlersignalen usw., z. B. über ein Feldbussystem.

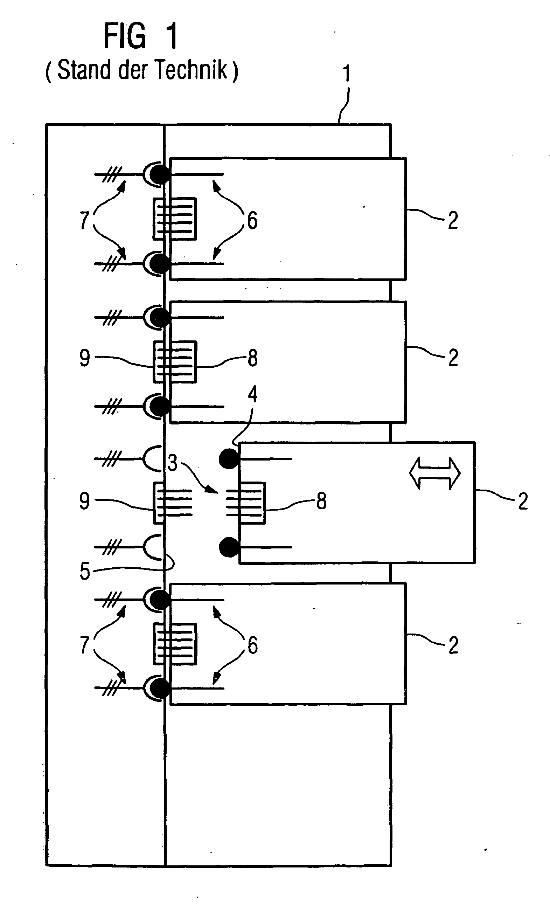

Zusätzlich sind, wie in FIG 1 dargestellt, sowohl an den Rückseiten 4 der Einschubmodule 2, als auch an den Rückseiten 5 der Einschubschächte 3 aneinander angepaßte mechanische Kodierstecker 8, 9 vorgesehen, die sicherstellen, daß der Betrieb eines bestimmten Einschubmoduls 2 immer nur in einem dafür bestimmten Einschubschacht 3 möglich ist. Passen die Kodierstecker 8, 9 nicht zueinander, ist ein vollständiges Einschieben des Einschubmoduls 2 in den Einschubschacht 3 nicht möglich, so daß auch keine Kontaktierung der Steckschienen bzw. Steckverbinder 6, 7 und damit kein Betrieb möglich ist.

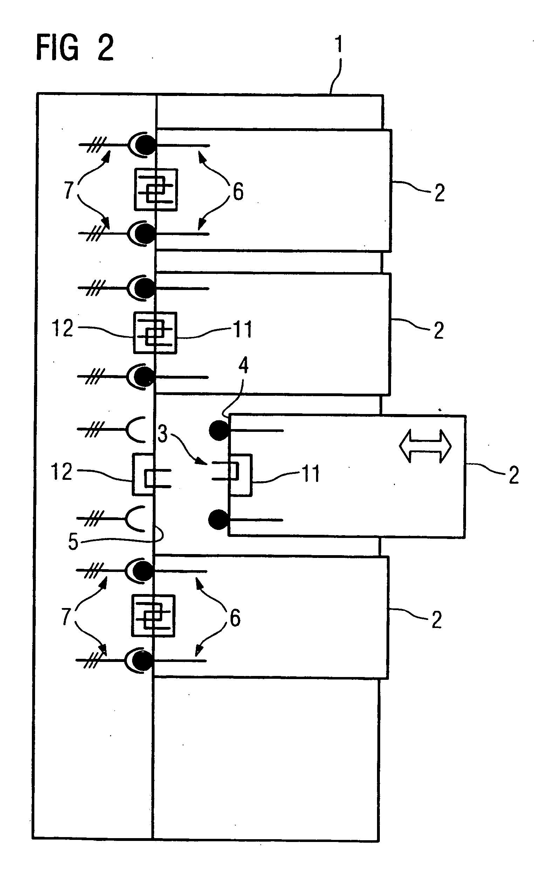

Anstelle der in FIG 1 abgebildeten Kodierstecker 8, 9 sieht es die Erfindung vor, eine drahtlose Kodierung vorzunehmen, siehe FIG 2. Die zur Übertragung von Hauptstrom, Hilfsenergie und zu Kommunikationszwecken zwischen dem Einschubmodul 2 und dem Einschubschacht 3 dienenden, zusammenwirkende Steckschienen bzw. Steckverbinder 6, 7 sind - ebenso wie im Stand der Technik - sowohl an den Rückseiten 4 der Einschubmodule 2, als auch an den Rückseiten 5 der Einschubschächte 3 vorgesehen.

An die Stelle der Kodierstecker 8, 9 treten jedoch Einrichtungen 11, 12 zur drahtlosen Kommunikation. Diese Kommunikationseinrichtungen 11, 12 sind zum Senden und/oder Empfangen von Daten ausgebildet, die für die Erkennung des Einschubschachtes 2 und/oder des Einschubmoduls 3 relevant sind. Dabei sind die Kommunikationseinrichtungen 11, 12 in der hier beschriebenen Ausführung sowohl den Einschubmodulen 2, als auch den Einschubschächten 3 zugeordnet. Die Zuordnung erfolgt in diesem speziellen Fall dergestalt, daß die Kommunikationseinrichtungen 11, 12 - wie zuvor die Kodierstecker 8, 9 - an den Rückseiten 4 der Einschubmodule 2 und an den Rückseiten 5 der Einschubschächte 3 befestigt sind. Durch eine solche Anordnung wird im montierten Zustand ein kleinstmöglicher Abstand zwischen zusammenwirkenden Kommunikationseinrichtungen 11, 12 erzielt, so daß u. a. die verwendeten Kommunikationseinrichtungen 11, 12 mit geringen Sendeleistungen arbeiten und nur entsprechend klein dimensionierte Sende- und Empfangsvorrichtungen benötigen. Dies ermöglicht nicht nur eine besonders kompakte Bauart des Motorschaltschrankes 1. Es verringert auch den Materialaufwand für die Kommunikationseinrichtungen 11, 12 und damit deren Herstellungskosten.

Die Zuordnung der Kommunikationseinrichtungen 11, 12 zu den Komponenten 2, 3 kann aber auch anderweitig vorgesehen sein. So ist es beispielsweise nicht zwingend erforderlich, daß die Kommunikationseinrichtungen 11, 12 direkt mit den Komponenten 2, 3 verbunden sind. Auch eine lose Zuordnung der Kommunikationseinrichtungen 11, 12 zu den Komponenten 2, 3 ist denkbar. So kann ein Empfänger und/oder Sender beispielsweise in einem Einschubmodul 2 lose einliegen. Ebenso denkbar ist eine entfernte Positionierung der Kommunikationseinrichtungen 11, 12, auch außerhalb der Komponenten 2, 3. Eine solche entfernte Positionierung ist insoweit möglich, als eine eindeutige Zuordnung zu einer bestimmten Komponente 2, 3 verwirklicht ist.

In dem gezeigten Ausführungsbeispiel erhält die dem Einschubmodul 3 zugeordnete erste Kommunikationseinrichtung 11 erkennungsrelevante Daten, insbesondere eine eindeutige Positionskennung (Schacht-ID), von der dem Einschubschacht 3 zugeordneten zweiten Kommunikationseinrichtung 12. Genauer gesagt werden Daten, die für die Erkennung des Einschubschachtes 3 relevant sind, über ein dem Einschubmodul 2 zugeordnetes erstes RFID-Modul als Teil der ersten Kommunikationseinrichtung 11 von einem dem Einschubschacht 3 zugeordneten zweiten RFID-Modul als Teil der zweiten Kommunikationseinrichtung 12 angefordert. Dabei wird das zweite RFID-Modul über das erste RFID-Modul mit Energie versorgt ("passive Kodierung").

Das zweite, dem Einschubschacht 3 zugeordnete RFID-Modul umfaßt dabei einen RFID-Transponder, in dessen Speicher die erkennungsrelevanten Daten (Schacht-ID) abgelegt sind. Das erste, dem Einschubmodul 2 zugeordnete RFID-Modul umfaßt ein RFID-Lesegerät. Das RFID-Lesegerät erzeugt automatisch bei der Annäherung an den RFID-Transponder während des Einführens des Einschubmoduls 2 in den Einschubschacht 3 ein hochfrequentes elektromagnetisches Wechselfeld, daß von einer Antenne des RFID-Transponders empfangen wird. Durch den dadurch induzierten Strom wird der Mikrochip im RFID-Transponder aktiviert und die dort gespeicherten erkennungsrelevanten Daten werden an das RFID-Lesegerät übertragen.

Anschließend überträgt die dem Einschubmodul 2 zugeordnete erste Kommunikationseinrichtung 11 die empfangenen erkennungsrelevanten Daten an eine dem Einschubmodul 2 zugeordnete lokale, d. h. als Bestandteil des Einschubmoduls 2 ausgebildete Freigabeeinheit, die als Datenverarbeitungsvorrichtung ausgebildet ist. Dort erfolgt die Verarbeitung der erkennungsrelevanten Daten unter Zuhilfenahme eines Computerprogramms, welches zu diesem Zweck in den Speicher der Datenverarbeitungsvorrichtung geladen ist und ausgeführt wird.

Nach einer Überprüfung der erkennungsrelevanten Daten wird das Einschubmodul 2 zum Betrieb mit dem korrespondierenden Einschubschacht 3 freigegeben, sofern ein solcher Betrieb erlaubt ist. Alternativ dazu wird das Einschubmodul 2 für einen solchen Betrieb gesperrt oder bleibt gesperrt, je nach Voreinstellung. Besonders vorteilhaft ist es, wenn die erste Kommunikationseinrichtung 11 in diesem Fall eine entsprechende Nachricht - vorzugsweise unter Angabe des aktuellen Einbauortes des Einschubmoduls 2 - an einen externen Empfänger sendet, beispielsweise an die Steuerzentrale des Motorschaltschrankes 1 oder dergleichen. Hierzu wird, falls es sich um eine kommunikationsfähige Schaltanlage handelt und dies noch nicht erfolgt ist, dem Einschubmodul 2 von der dem Einschubschacht 3 zugeordneten Kommunikationseinrichtung 12 eine entsprechende Adreßinformation übergeben, die eine Lokalisierung des Einschubmoduls 2 in dem Motorschaltschrank 1 ermöglicht.

Unter Umständen kann es vor der Freigabe erforderlich sein, das Einschubmodul 2 und/oder den Einschubschacht 3, hier insbesondere die Parameter für die Übertragung von Hauptstrom, Hilfsenergie und Kommunikation (Protokolle etc.) zu modifizieren. Bei einer kommunikationsfähigen Schaltanlage werden die hierfür erforderlichen Änderungen vorzugsweise durch die Steuerzentrale des Motorschaltschrankes 1 vorgenommen.

## Patentansprüche

1. Verfahren zum Erkennen von Komponenten (2, 3) in einer elektrischen Niederspannungs-Schaltanlage (1) mit wenigstens einem in einem Einschubschacht (3) positionierbaren, zur drahtlosen Übertragung erkennungsrelevanter Daten ausgebildeten Einschubmodul (2),
**dadurch gekennzeichnet, dass** Daten, die für die Erkennung des Einschubschachtes (3) und des Einschubmoduls (2) relevant sind, von Kommunikationseinrichtungen (11, 12), die dem Einschubmodul (2) und dem Einschubschacht (3) zugeordnet sind, drahtlos gesendet und drahtlos empfangen werden, und dass eine automatische Erkennung des Einschubschachtes (3) und des Einschubmoduls (2) erfolgt, die eine automatische Zuordnung dieser Komponenten (2, 3) zueinander ermöglicht.

2. Verfahren nach Anspruch 1,
**dadurch gekennzeichnet, dass** das Senden und/oder Empfangen der erkennungsrelevanten Daten während der oder unmittelbar im Anschluss an die Montage des Einschubmoduls (2) in den Einschubschacht (3) und vorzugsweise automatisch erfolgt.

3. Verfahren nach Anspruch 1 oder 2,
**dadurch gekennzeichnet, dass** die dem Einschubschacht (3) zugeordnete Kommunikationseinrichtung (12) und/oder die dem Einschubmodul (2) zugeordnete Kommunikationseinrichtung (11) erkennungsrelevante Daten von derjenigen Kommunikationseinrichtung (11, 12) erhält, die der jeweils korrespondierenden Komponente (2, 3) zugeordnet ist.

4. Verfahren nach Anspruch 3,
**dadurch gekennzeichnet, dass** die dem Einschubschacht (3) zugeordnete Kommunikationseinrichtung (12) und/oder die dem Einschubmodul (2) zugeordnete Kommunikationseinrichtung (11) die erkennungsrelevanten Daten an eine dem Einschubschacht (3) und/oder dem Einschubmodul (2) zugeordnete lokale Freigabeeinheit und/oder an eine dem Einschubschacht (3) und/oder dem Einschubmodul (2) zugeordnete entfernte Freigabeeinheit überträgt.

5. Verfahren nach Anspruch 4,
**dadurch gekennzeichnet, dass** das Einschubmodul (2) und/oder der Einschubschacht (3) zum Betrieb mit der korrespondierenden Komponente (3, 2) freigegeben wird, wenn eine Überprüfung der erkennungsrelevante Daten erfolgreich abgeschlossen ist, anderenfalls das Einschubmodul (2) und/oder der Einschubschacht (3) für einen solchen Betrieb gesperrt bleibt oder gesperrt wird.

6. Verfahren nach Anspruch 5,
**dadurch gekennzeichnet, dass** das Einschubmodul (2) und/oder der Einschubschacht (3) vor der Freigabe an einen Betrieb mit der korrespondierenden Komponente (3, 2) angepasst wird.

7. Verfahren nach Anspruch 5 oder 6,
**dadurch gekennzeichnet, dass** das Einschubmodul (2) und/oder der Einschubschacht (3) nach der Freigabe mit Daten versorgt wird, die an einen Betrieb mit der korrespondierenden Komponente (3, 2) angepasst sind.

8. Elektrische Niederspannungs-Schaltanlage (1), mit wenigstens einem in einem Einschubschacht (3) positionierbaren, zur drahtlosen Übertragung erkennungsrelevanter Daten ausgebildeten Einschubmodul (2),
**dadurch gekennzeichnet, dass** sowohl dem Einschubschacht (3) als auch dem Einschubmodul (2) Einrichtungen (12, 11) zur drahtlosen Kommunikation zugeordnet sind, wobei die Kommunikationseinrichtungen (12, 11) zum Senden und Empfangen von Daten ausgebildet sind, die für eine automatische Erkennung des Einschubschachtes (3) und des Einschubmoduls (2) relevant sind, und eine automatische Zuordnung dieser Komponenten (2, 3) zueinander ermöglichen.

9. Elektrische Niederspannungs-Schaltanlage (1) nach Anspruch 8, **gekennzeichnet durch** Mittel zum automatischen Erkennen des Einschubschachtes (3) und des Einschubmoduls (2).

10. Elektrische Niederspannungs-Schaltanlage (1) nach Anspruch 9, **gekennzeichnet durch** eine dem Einschubschacht (3) und/oder dem Einschubmodul (2) zugeordnete lokale Freigabeeinheit und/oder eine dem Einschubschacht (3) und/oder dem Einschubmodul (2) zugeordnete entfernte Freigabeeinheit, die zur Überprüfung der erkennungsrelevanten Daten und zur Entscheidung über die Freigabe des Einschubschachtes (3) und/oder des Einschubmoduls (2) ausgebildet ist.

## Claims

1. Method for identifying components (2, 3) in an electrical low-voltage switchgear assembly (1) with at least one truck module (2) which can be positioned in a truck slot (3) and is configured for the wireless transmission of data that is relevant for identification,
**characterised in that** data that is relevant for the identification of the truck slot (3) and the truck module (2) is transmitted wirelessly and received wirelessly by communication devices (11, 12), which are associated with the truck module (2) and the truck slot (3) and that automatic identification of the truck slot (3) and the truck module (2) results, allowing automatic association of said components (2, 3) with one another.

2. Method according to claim 1,
**characterised in that** the transmitting and/or receiving of the data that is relevant for identification takes place during or immediately after assembly of the truck module (2) in the truck slot (3) and preferably automatically.

3. Method according to claim 1 or 2,
**characterised in that** the communication device (12) associated with the truck slot (3) and/or the communication device (11) associated with the truck module (2) receives data that is relevant for identification from the communication device (11, 12) which is associated with the respectively corresponding component (2, 3).

4. Method according to claim 3,
**characterised in that** the communication device (12) associated with the truck slot (3) and/or the communication device (11) associated with the truck module (2) transmits the data that is relevant for identification to a local enabling unit associated with the truck slot (3) and/or the truck module (2) and/or to a remote enabling unit associated with the truck slot (3) and/or the truck module (2).

5. Method according to claim 4,
**characterised in that** the truck module (2) and/or the truck slot (3) is/are enabled to operate with the corresponding component (3, 2) when verification of the identification-related data has been completed successfully. Otherwise the truck module (2) and/or the truck slot (3) remain(s) or is/are blocked for such operation.

6. Method according to claim 5,
**characterised in that** the truck module (2) and/or the truck slot (3) is/are adapted for operation with the corresponding component (3, 2) before enabling takes place.

7. Method according to claim 5 or 6,
**characterised in that** after enabling has taken place, the truck module (2) and/or the truck slot (3) is supplied with data which is adapted to operation with the corresponding component (3, 2).

8. Electrical low-voltage switchgear assembly (1) with at least one truck module (2) which can be positioned in a truck slot (3) and is configured for the wireless transmission of data that is relevant for identification,
**characterised in that** devices (12, 11) for wireless communication are associated with both the truck slot (3) and the truck module (2), the communication devices (12, 11) being configured to transmit and receive data, which is relevant for automatic identification of the truck slot (3) and the truck module (2) and allows automatic association of said components (2, 3) with one another.

9. Electrical low-voltage switchgear assembly (1) according to claim 8, **characterised by** means for automatic identification of the truck slot (3) and the truck module (2).

10. Electrical low-voltage switchgear assembly (1) according to claim 9, **characterised by** a local enabling unit associated with the truck slot (3) and/or the truck module (2) and/or a remote enabling unit associated with the truck slot (3) and/or the truck module (2) which is/are configured to verify the data that is relevant for identification and to make a decision regarding the enabling of the truck slot (3) and/or the truck module (2).

## Revendications

1. Procédé de reconnaissance de composants (2, 3) dans une installation de commutation à basse tension électrique (1) avec au moins un module insérable (2) pouvant être positionné dans un compartiment d'insertion (3) et réalisé en vue de la transmission sans fil de données pertinentes pour la reconnaissance, **caractérisé en ce que** des données qui sont pertinentes pour la reconnaissance du compartiment d'insertion (3) et du module insérable (2) sont émises sans fil et reçues sans fil par des dispositifs de communication (11, 12) qui sont associés au module insérable (2) et au compartiment d'insertion (3) et **en ce qu'**il se produit une reconnaissance automatique du compartiment d'insertion (3) et du module insérable (2), laquelle permet une association automatique de ces composants (2, 3) l'un à l'autre.

2. Procédé selon la revendication 1, **caractérisé en ce que** l'émission et/ou la réception des données pertinentes pour la reconnaissance ont lieu pendant le montage du module insérable (2) dans le compartiment d'insertion (3) ou immédiatement à la suite dudit montage, et de préférence automatiquement.

3. Procédé selon la revendication 1 ou 2, **caractérisé en ce que** le dispositif de communication (12) associé au compartiment d'insertion (3) et/ou le dispositif de communication (11) associé au module insérable (2) reçoivent des données pertinentes pour la reconnaissance du dispositif de communication (11, 12) qui est associé au composant respectivement correspondant (2, 3).

4. Procédé selon la revendication 3, **caractérisé en ce que** le dispositif de communication (12) associé au compartiment d'insertion (3) et/ou le dispositif de communication (11) associé au module insérable (2) transmettent les données pertinentes pour la reconnaissance à une unité de déblocage locale associée au compartiment d'insertion (3) et/ou au module insérable (2) et/ou à une unité de déblocage distante associée au compartiment d'insertion (3) et/ou au module insérable (2).

5. Procédé selon la revendication 4, **caractérisé en ce que** le module insérable (2) et/ou le compartiment d'insertion (3) sont débloqués pour fonctionner avec le composant correspondant (3, 2) lorsqu'une vérification des données pertinentes pour la reconnaissance est terminée avec succès, le module insérable (2) et/ou le compartiment d'insertion (3), dans le cas contraire, restant bloqués ou étant bloqués pour un tel fonctionnement.

6. Procédé selon la revendication 5, **caractérisé en ce que** le module insérable (2) et/ou le compartiment d'insertion (3), avant le déblocage, sont adaptés à un fonctionnement avec le composant correspondant (3, 2).

7. Procédé selon la revendication 5 ou 6, **caractérisé en ce que** le module insérable (2) et/ou le compartiment d'insertion (3), après le déblocage, sont alimentés en données qui sont adaptées à un fonctionnement avec le composant correspondant (3, 2).

8. Installation de commutation à basse tension électrique (1) avec au moins un module insérable (2) pouvant être positionné dans un compartiment d'insertion (3) et réalisé en vue de la transmission sans fil de données pertinentes pour la reconnaissance, **caractérisée en ce que** sont associés, non seulement au compartiment d'insertion (3), mais aussi au module insérable (2), des dispositifs (12, 11) en vue de la communication sans fil, les dispositif de communication (12, 11) étant réalisés pour émettre et recevoir des données qui sont pertinentes pour une reconnaissance automatique du compartiment d'insertion (3) et du module insérable (2), et qui permettent une association automatique de ces composants (2, 3) l'un à l'autre.

9. Installation de commutation à basse tension électrique (1) selon la revendication 8, **caractérisée par** des moyens de reconnaissance automatique du compartiment d'insertion (3) et du module insérable (2).

10. Installation de commutation à basse tension électrique (1) selon la revendication 9, **caractérisée par** une unité de déblocage locale associée au compartiment d'insertion (3) et/ou au module insérable (2) et/ou une unité de déblocage distante associée au compartiment d'insertion (3) et/ou au module insérable (2), lesquelles sont réalisées pour vérifier les données pertinentes pour la reconnaissance et pour décider du déblocage du compartiment d'insertion (3) et/ou du module insérable (2).
